# EUROPEAN PATENT APPLICATION

(11) **EP 3 006 804 A1**
(43) Date of publication of application: **13.04.2016**
(21) Application number: 14801733.8
(22) Date of filing: 23.05.2014
(51) Int. Cl.: F16L 55/163, F16L 21/08, F16B 2/08

(54) **DEVICE FOR PARTIALLY REPAIRING PIPE USING HOSE BAND**

(30) Priority: 23.05.2013 KR 20130058419
(71) Applicant: PARK, Hee Soo, 16282 Suwon-si, Gyeonggi-do (KR)
(72) Inventor: PARK, Hee Soo, 16282 Suwon-si, Gyeonggi-do (KR)
(74) Representative: ABG Patentes, S.L.
(86) International application number: PCT/KR2014/004615
(87) International publication number: WO 2014/189317

(57) **Abstract**

Disclosed is a device for partially repairing a pipe by using a hose band for connecting oil or water pipes which facilitates the repair of a leak part generated in the pipe with low cost. To this end the device includes a hose band, and a leak prevention means consisting of a packing material provided in the inside of the hose band. The present invention makes it possible to repair a leak of a pipe by means of a cheap hose band instead of an expensive pipe coupling, thus reducing the cost for managing an apartment or house provided with pipes.

## Description

### Technical Field

The present invention relates to a device for partially repairing a pipe which is used for repairing a leaking pipe, more particularly, to a device for partially repairing a pipe using a hose band fastened to a joint part of various connecting pipe bodies such as oil pipes or water pipes, etc. for conveniently repairing a leak part generated in the pipe with a low cost.

### Background Art

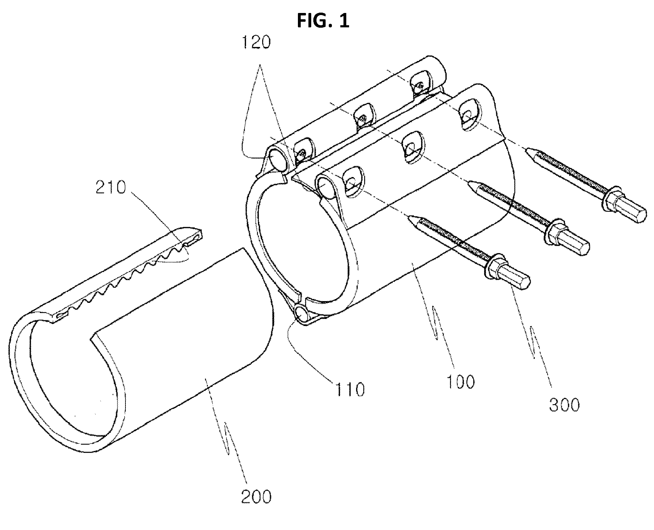

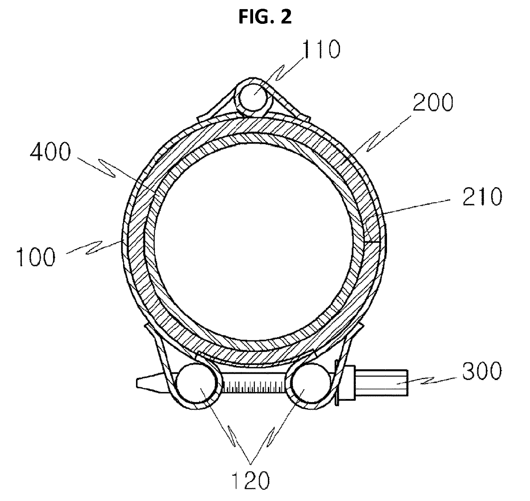

In general, a pipe coupling is used as means for connecting pipes or tubes, etc. (hereinafter, collectively referred to as "pipe"), and an example of such a pipe coupling is illustrated in Figs.1 and 2.

The pipe coupling illustrated in Fig.1 includes a cylindrical case (100) and a leak-preventing gasket or packing (200)(hereinafter, collectively referred to as "packing") disposed inside the case.

The pipe coupling is used for repair. The case (100) is divided into two semi-cylindricalcases as illustrated in the figures. The two semi-cylindrical cases are coupled at one side by a hinge (110) and the other ends of the two semi-cylindrical cases are provided with respective tightening rods (120) having through-holes formed therein. Bolts (300) pass through the tightening rods (120) and are tightened, and thereby an inner surface of the packing disposed inside the case is brought into close contact with an outer surface of the pipe (400), whereby fluid is prevented from leaking through a part at which two pipes are connected.

That is to say, by hinge-coupling the two semi-cylindrical cases at one side and thus allowing the other ends to be opened or closed, the pipe coupling can be easily disposed even on the middle of a pipe already disposed.

Of course, there is also a pipe coupling configured such that both ends of each semi-cylindrical case are provided with respective tightening rods (120), wherein the bolts (300) pass through the tightening rods and are tightened to thereby assemble the two semi-cylindrical cases. However, such all pipe couplings for repair are provided with a packing (200) cut at its one side as illustrated in Fig.1.

The packing provided in such a pipe coupling for repair is in the form of a ring cut at its one side as illustrated in Fig.1 or of an elongated plate body, wherein after two cut ends (210) of the packing have been abutted against each other, the bolts (300) are tightened and thus the two semi-cylindrical cases are clamped and accordingly the ends (210) of the packing (200) are brought into close contact with each other.

However, while the pipe coupling described above can provide an excellent repairing function in a case where leak holes are concentratedly formed on a portion of the pipe, a problem may occurs that much cost is required for the repair of the pipe in a case where multiple leak holes of needle hole size are formed along a longitudinal direction of the pipe because cost for producing the pipe coupling is high. Furthermore, while the pipe coupling can be used for pipes having similar diameters, there is a problem that the pipe coupling cannot be used for pipes greatly different from each other in diameter.

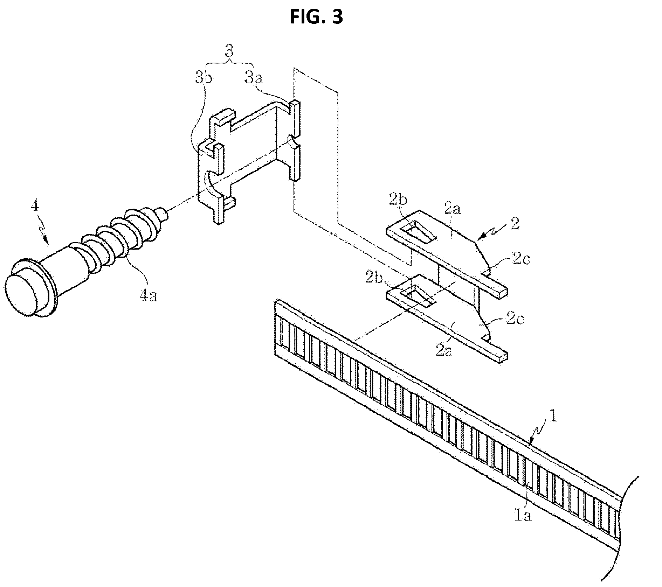

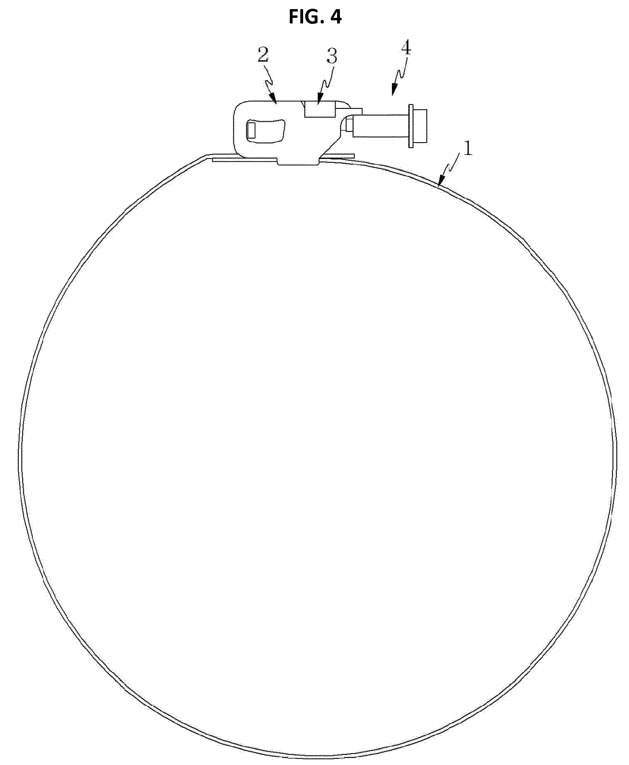

Meanwhile, a hose band for pipe connection is conventionally used as means for coupling an joint part of various connecting pipe bodies such as oil pipes or water pipes. An example of such a hose band for pipe connection is illustrated in Figs.3 and 4.

As illustrated in Figs.3 and 4, the hose band includes a strip-like unit (1), a bi-axial resting unit(2), a form-fitted unit (3) and a bolt (4).

Specifically, the strip-like unit (1) has multiple constant transverse slots (1a) formed along a longitudinal direction of the strip-like unit over the entire length thereof, and the bi-axial resting unit (2) has a channel-like cross section and is fixed to one end of the strip-like unit.

Furthermore, the form-fitted unit (3) has a lower male part (3a) integrally formed at its lower end, which part is pivotably inserted in cam-like holes (2b) formed in both standing part (2a) of the bi-axial resting unit (2); and a upper male part (3b) integrally formed at an upper end of the form-fitted unit, which part is caught by a female cut-out part (2c) formed in the bi-axial resting unit (2) when moving forward in one direction along the strip-like unit (1) while being formed parallel to the strip-like unit (1) and is released from the female cut-out part (2c) when moving backward in the other direction along the strip-like unit (1).

In addition, the bolt unit (4) is mounted in the form-fitted unit (3) by passing through the lower male part (3a) and the upper male part (3b) of the form-fitted unit (3), and a helical part (4a) which can be fitted in the slots (1a) positioned between the upper male part (3b) and lower male part (3a).

### Summary of the Invention

### Technical problem

Therefore, an object of the present invention is to provide a device for partially repairing a pipe using a hose band to tightly close a hole created in a deteriorated pipe so that a fluid flowing through the pipe does not leak out.

### Solutions to the problem

To achieve the above-mentioned object, an embodiment of the present invention provides a device for partially repairing a pipe, comprising a hose band; and a leak-preventing means comprising a packing material positioned inside the hose band.

Furthermore, to achieve the above-mentioned object, another embodiment of the present invention provides a device for partially repairing a pipe, comprising a hose band; and a leak-preventing means which comprises a close contact plate having cut holes respectively formed at both ends thereof so that the close contact plate can be insertion-coupled with the hose band and which comprises a packing material provided on an inner surface of the close contact plate so as to be positioned inside the hose band.

### Effects of the invention

According to the present invention, a hole in a deteriorated pipe can be repaired with a low cost using an inexpensive hose band instead of relatively expensive pipe coupling, thus reducing the cost for managing an apartment or house provided with pipes.

Furthermore, the device of the present invention is applicable to pipes of various sizes regardless of diameters of the pipes, and a suitable structure can be employed depending on the size of the hole.

In addition, the device of the present invention can be simply installed on the pipe, thus reducing a working time and thus labor cost.

Moreover, without interrupting the flow of water through the pipe, the device of the present invention can quickly stop the leak of water in a short time, thus maximizing an efficiency of a leak stopping work.

### Brief Description of the Drawings

Fig.1 is a perspective view illustrating an example of a conventional pipe coupling provided with a packing;
Fig.2 is a cross-sectional view illustrating the pipe coupling illustrated in Fig.1;
Fig.3 is an exploded perspective view for describing a conventional hose band;
Fig.4 is a side view illustrating the hose band illustrated in Fig.3;
Fig.5 is a perspective view illustrating a device for partially repairing a pipe according to an embodiment of the present invention;
Fig.6 is an exploded perspective view illustrating an embodiment of a hose band according to the present invention;
Fig.7 is a top view illustrating another embodiment of the hose band according to the present invention;
Fig.8 is a top view illustrating yet another embodiment of the hose band according to the present invention;
Fig.9 is a perspective view illustrating a device for partially repairing a pipe according to another embodiment of the present invention;

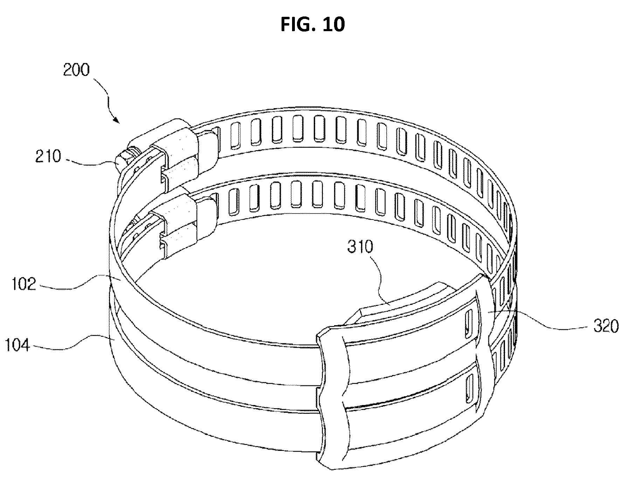

Fig.10 is a perspective view illustrating a device for partially repairing a pipe according to yet another embodiment of the present invention;
Fig.1 is a perspective view for describing an embodiment of a close contact plate according to the present invention; and

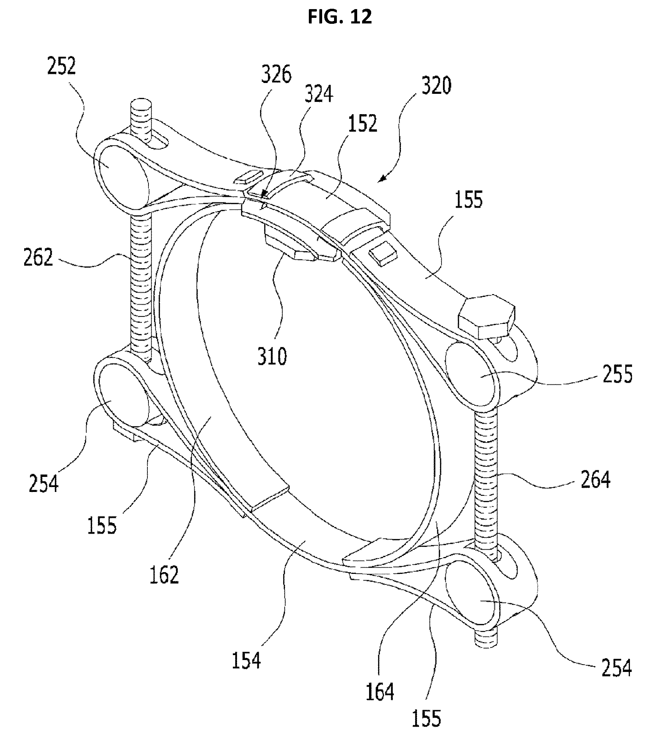

Fig.12 is a perspective view for describing another embodiment of the close contact plate according to the present invention.

### Detailed Description of the Invention

In the following, referring to the attached drawings, a detailed description will be made of a device for partially repairing a pipe using a hose band (hereinafter, simply referred to as "a device for partially repairing a pipe"), according to preferred embodiments of the present invention.

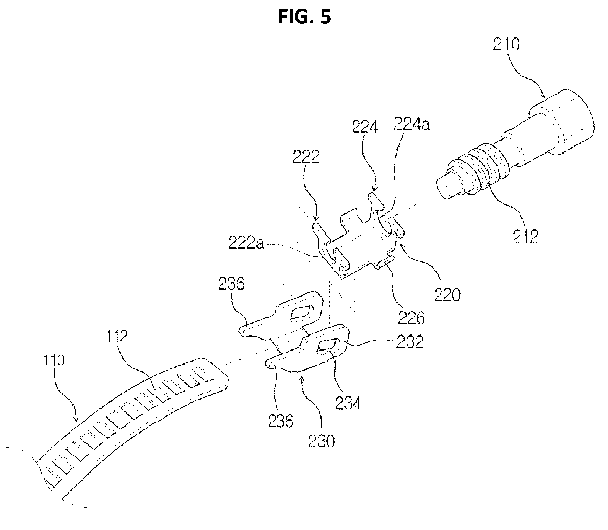

Fig.5 is a perspective view illustrating the device for partially repairing a pipe according to an embodiment of the present invention.

Referring to Fig.5, the device for partially repairing a pipe according to an embodiment of the present invention is for quickly repairing a hole formed in the pipe and thus preventing leak of fluid flowing through the pipe and also preventing enlargement of the hole due to pressure until the pipe is replaced. The device includes a hose band and a leak-preventing means (300) which is disposed on the hose band and which includes a packing material (310) brought into close contact with the hole formed in the pipe to thereby seal the hole.

In the following, referring to the attached drawings, the device will be described in more detail with respect to each of constituent elements.

Referring to Fig.5, the device for partially repairing a pipe according to the present invention includes the hose band.

The hose band is conventionally used as means for coupling a joint part of various connecting pipe bodies (hereinafter, simply referred to as "pipe') such as oil pipes or water pipes. In the present invention, the hose band serves to fix the leak-preventing means (300) to a leak part of the pipe and also provide a pressure to the leak-preventing means (300).

A conventional pipe coupling used for the repair of pipe is sold at a price of several ten thousand wons, whereas the above-described hose band is sold at a price of several thousand wons and therefore is effective for repairing multiple leak parts of needle hole size formed in the pipe. For example, for repairing five holes (holes of needle hole size) formed at different positions, total five conventional pipe couplings are required and likewise total five devices for partially repairing a pipe according to the present invention are required, however, since the devices for partially repairing a pipe using a hose band according to the present invention has a production cost a fifth or less times that of the pipe coupling, the present invention is a most inexpensive and easy leak-preventing device by means of which emergency measures are taken for pipes used in an apartment or house or the like.

In a specific aspect, as illustrated in Fig.5, the hose band according to the present invention includes a strip-like unit (100) which has a plurality of through-holes (110) formed in a row along a longitudinal direction of the unit and which forms a ring by both end portions of the unit being brought into close contact with each other so that the unit can be coupled to the leak part of the pipe; and an inner diameter-adjusting unit (200) which is coupled with the strip-like unit (100) with the both end portions thereof overlapping with each other and which adjusts an inner diameter of the ring formed by the strip-like unit by means of a driving force provided from the outside. Herein the inner diameter-adjusting unit (200) may include a bolt (210), a fixing part (220) and a body (230).

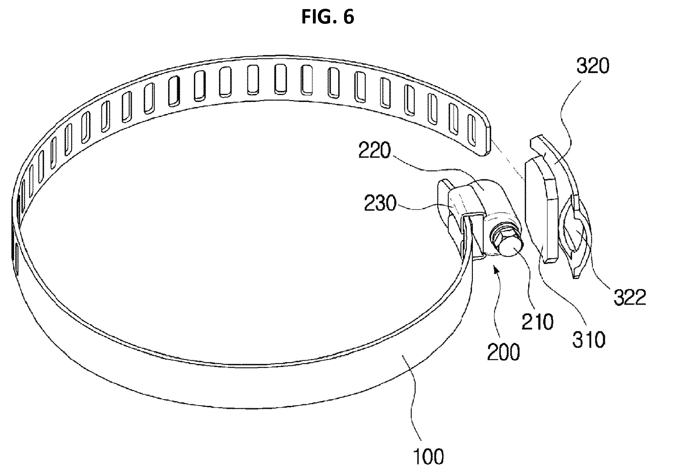

More specifically, as illustrated in Fig.6, the inner diameter-adjusting unit (200) includes the body (230) wherein one end portion of the strip-like unit (100) is fixed to a lower part of the body and in both lateral plates (232) of the body there are formed elongated holes (234) inclined toward one end of the lateral plates and catch end portions (236) provided at the other end portion and inclined inwards to thus have increasing width; and the fixing part (220) wherein a hinge part (222) is formed at one end of the fixing part, which hinge part is rotatable in the elongated holes (234) of the body (230) and movable in a longitudinal direction of the elongated holes (234), and wherein a catch protruding part (224) is formed at the other end so that the protruding part can be caught by lower edges of the catch end portions (236).

At this time, The bolt (210) is rotatably disposed with its end portion and axial middle portion being inserted in rotational supports (222a, 224a) formed in the hinge part (222) and the catch protruding part (224). A helical gear (212) is formed on an outer circumferential surface of an axial part of the bolt positioned between the rotational supports (222a, 224a), which gear tightens the strip-like unit (100) when rotating while caught in the through-hole (110).

Furthermore, stops (226) are formed on both sides of the fixing part (220) while protruding outwards with a certain length. The stops engage a top portion of the body (230) to thereby prevent the fixing part (220) from further rotating while hinge-coupled with the body (230).

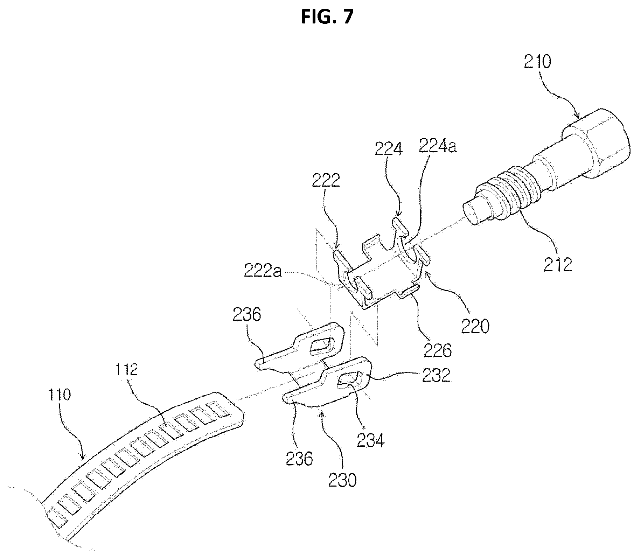

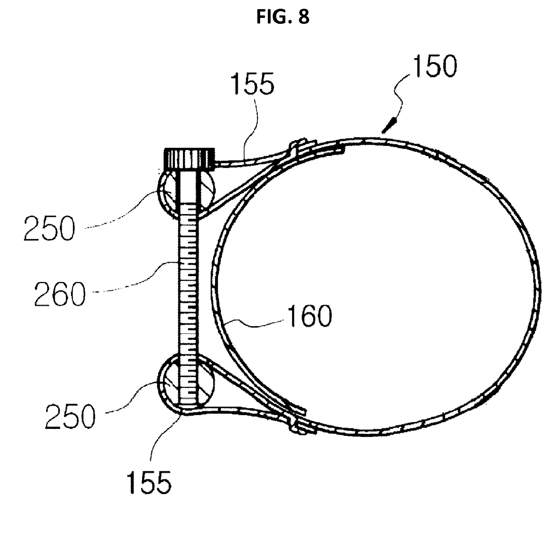

Fig.7 is a top view illustrating another embodiment of the hose band according to the present invention, and Fig.8 is a top view illustrating yet another embodiment of the hose band according to the present invention.

In another embodiment, as illustrated in Fig.7, the hose band according to the present invention includes a circular arc-like band unit (150) provided with a pair of closed curve-like fitting means (155) opposite to each other; an auxiliary band unit (160) coupled to an inner circumferential surface of the band unit (150) and forming a cylindrical structure together with the band unit (150); a pair of coupling nuts (250) respectively inserted in the fitting means (155) and having threaded holes formed therein opposite to each other; and coupling bolt (260) coupled with the fitting means (155) and the coupling nuts (250) and adjusting a distance between the pair of coupling nuts (250) depending on a direction of rotation of the bolt. Herein, each fitting means (155) has a through-hole formed therein so that the coupling nut (260) can be inserted in the fitting means.

In yet another embodiment, as illustrated in Fig.8, the hose band according to the present invention includes first and second circular arc-like band units (152, 154) each having both end portions respectively provided with closed curve-like fitting means (155); first and second auxiliary band units (162, 164) each coupled to inner circumferential surfaces of the first and second band units (152, 154) to form a cylindrical structure together with the band units (152, 154); a pair of first coupling nuts (252) which are respectively inserted in the left fitting means (155) of the first band unit (152) and the left fitting means (155) of the second band unit (154) adjacent to the left fitting means (155) of the first band unit (152) and which have threaded holes formed therein opposite to each other; a first coupling bolt (262) coupled with the fitting means (155) and the pair of first coupling nuts (252) and adjusting a distance between the pair of coupling nuts (252) depending on a direction of rotation of the bolt; a pair of second coupling nuts (254) which are respectively inserted in the right fitting means (155) of the second band unit (154) and the right fitting means (155) of the first band unit (152) adjacent to the right fitting means (155) of the second band unit (154) and which have threaded holes formed therein opposite to each other; and a second coupling bolt (264) coupled with the fitting means (155) and the pair of second coupling nuts (254) and adjusting a distance between the pair of coupling nuts (254) depending on the direction of rotation of the bolt.

Referring to Fig.5, the device for partially repairing a pipe according to the present invention includes the leak-preventing means (300).

The leak-preventing means (300) is disposed on the strip-like unit (100) and contacts with a hole created in the pipe due to soil corrosion etc. to prevent the leak of fluid flowing through the pipe. The leak-preventing means includes a packing material (310) which is positioned inside the strip-like unit (100) and which is brought into close contact with the hole in the pipe by the hose band to thereby prevent the leak through the hole.

For the packing material (310), any one or more of raw rubber, butyl rubber, neoprene rubber, silicone, Teflon and synthetic resin may be used. For example, in a case where the pipe provides a flow path for hot water or gas, the Teflon is preferably used for the packing material, and in a case where the pipe is used for transporting liquid for oil or chemicals, the butyl rubber, neoprene rubber, silicone, etc. are preferably used for the packing material.

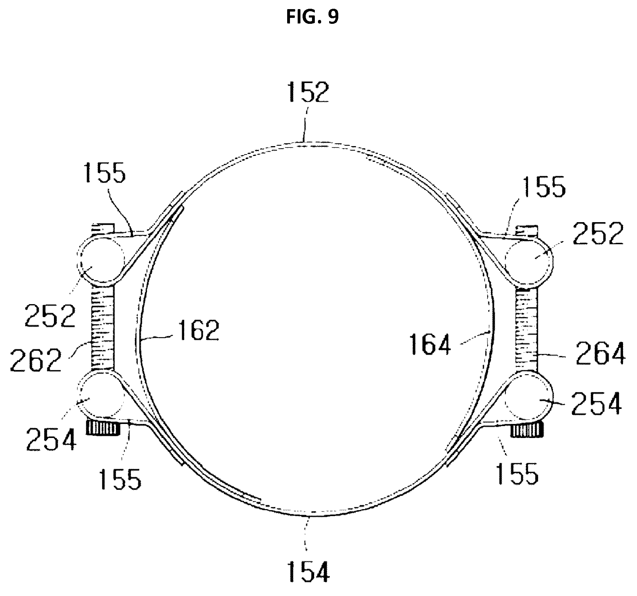

As required, the leak-preventing means (300) according to the present invention includes a close contact plate (320) having cut holes (322) respectively formed at both ends thereof so that the close contact plate can be insertion-coupled with the strip-like unit (100); and the packing material (310) provided on an inner surface of the close contact plate (320) so as to be positioned inside the strip-like unit (100), as illustrated in Fig.9. Herein, the cut holes (322) are for insertion-coupling the close contact plate (320) with strip-like unit (100) and serves to allow the close contact plate (320) to be moved along the longitudinal direction of the strip-like unit (100) depending on a position of the hole formed in the pipe.

The close contact plate (320) is preferably made of metal material having corrosion resistance. As required, the close contact plate (320) may be formed in one piece with the packing material (310), and in this case, may be made of fluid-tight synthetic resin or metal.

More specifically, as the close contact plate (320), a high pressure-type close contact plate may be used which has a width one to three times the width of the strip-like unit (100) so that it can prevent the leak through a hole with a diameter as large as or greater than the width of the strip-like unit (100) or can be used for a pipe which transports the fluid at a high pressure.

Furthermore, in a case where the high pressure-type close contact plate cannot prevent occurrence of the leak, a broad width-type close contact plate coupled with two or more, preferably two to three, hose bands may be used as the close contact plate (320). Such a broad width-type close contact plate has two or more pairs, preferably two to three pairs, of the cut holes formed therein so that the plate can be coupled with a plurality of the hose bands, and the broad width-type close contact plate is formed so as to have the width three or more times the width of the strip-like unit (100).

In addition, the close contact plate (320) may be formed so as to have a curved shape corresponding to the pipe so that a uniform pressure can be provided to the packing material (310) brought into contact with the pipe.

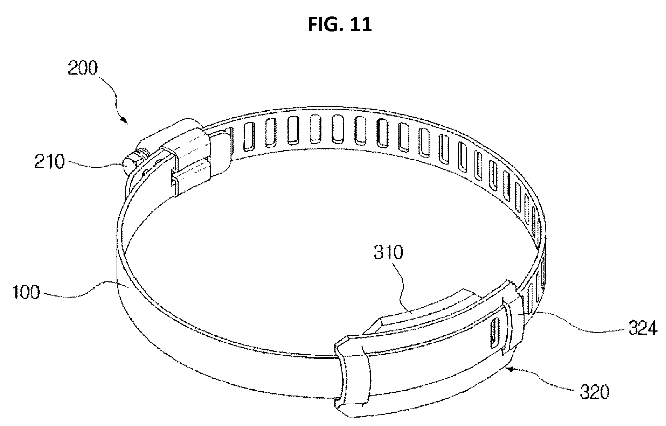

As required, as illustrated in Fig. 11, an outer plate part (324) of the close contact plate (320) positioned outside each of cut holes (322) may be formed in a bent structure so that the close contact plate can smoothly move along the strip-like unit (100) while coupled with the strip-like unit (100) through the cut holes (322). The outer plate part (324) protrudes upwards with respect to other parts of the close contact plate (320) due to the bent structure and thus allows each cut hole (322) to be enlarged.

Furthermore, as illustrated in Fig.12, in the close contact plate (320), a insertion passage (326) may be formed along the longitudinal direction of the close contact plate (320) in the outer plate part (324) positioned outside each of cut holes (322) so that the close contact plate can be releasably coupled with the hose band by a user even in the case where the strip-like unit (100) or band unit (150) of the hose band is formed in a closed curve structure. Herein, the insertion passage (326) is preferably formed on one side of the outer plate part (324) or in the middle thereof, but is not limited to it.

As such, the outer plate part (324) having the insertion passage (326) formed therein has flexibility, and therefore,
the close contact plate (320) can be conveniently coupled with the hose band by coupling the close contact plate with the hose band manually widening the insertion passage (326) and by thereafter narrowing the insertion passage (326).

Meanwhile, the packing material (310) may be formed so as to have a length identical to a distance between the cut holes (322) respectively formed at both ends of the close contact plate (320). This is for preventing the packing material (310) from being spaced apart from the close contact plate (320) by the cut holes (322).

Furthermore, the packing material (310) may be attached to an inner surface of the close contact plate (320) by the use of adhesive or may be attached to the inner surface of the close contact plate (320) by the use of thermo-compression.

The above-described device for partially repairing a pipe has more utility when used for a pipe having a plurality of holes of needle hole size formed along the longitudinal direction of the pipe, than when used for a pipe having a hole as large as or greater than the size of coin due to soil corrosion etc. or having holes concentratedly formed at a specific position. This is because a single repairing device can be used to prevent the occurrence of leak in the case where the pipe has the hole as large as or greater than the size of coin formed therein or holes concentratedly formed at the specific position, however, in the case where the pipe has the plurality of holes of needle hole size formed therein, as many repairing devices as the holes have to be installed.

That is to say, while, when used for repairing the leak part of needle hole size, the device for partially repairing a pipe according to the present invention exhibits a leak prevention performance equal to the conventional pipe coupling, the device is inexpensive compared to the pipe coupling and is simple to install, and therefore, has sufficient competitiveness to replace the existing pipe coupling.

Although the preferred embodiments of the present invention have been described as above, those skilled in the art may understand that the present invention may be variously modified or changed without departing from the scope and concept of the present invention as defined by the following claims.

## Claims

1. A device for partially repairing a pipe, comprising:
a hose band; and
a leak-preventing means comprising a packing material positioned inside the hose band.

2. The device for partially repairing a pipe according to claim 1, wherein the hose band comprises:
a strip-like unit which has a plurality of through-holes formed in a row along a longitudinal direction of the unit and which forms a ring by both end portions of the unit being brought into close contact with each other so that the unit can be coupled to a leak part of the pipe; and
an inner diameter-adjusting unit which adjusts an inner diameter of the ring formed by the strip-like unit by means of a driving force provided from the outside.

3. A device for partially repairing a pipe, comprising:
a hose band; and
a leak-preventing means which comprises a close contact plate having cut holes respectively formed at both ends thereof so that the close contact plate can be insertion-coupled with the hose band and which comprises a packing material provided on an inner surface of the close contact plate so as to be positioned inside the hose band.

4. The device for partially repairing a pipe according to claim 3, wherein the close contact plate has two or three pairs of the cut holes formed therein and two or three hose bands are provided.

5. The device for partially repairing a pipe according to claim 3, wherein the close contact plate has an insertion passage formed along a longitudinal direction of the close contact plate in an outer plate part positioned outside each of the cut holes.

6. The device for partially repairing a pipe according to claim 3, wherein the packing material is formed so as to have a length identical to a distance between the cut holes respectively formed at both ends of the close contact plate.

7. The device for partially repairing a pipe according to claim 3, wherein any one or more selected from the group consisting of raw rubber, butyl rubber, neoprene rubber, silicone, and Teflon is used for the packing material.

8. The device for partially repairing a pipe according to claim 3, wherein the hose band comprises:
a strip-like unit which has a plurality of through-holes formed in a row along a longitudinal direction of the unit and which forms a ring by both end portions of the unit being brought into close contact with each other so that the unit can be coupled to a leak part of the pipe; and
an inner diameter-adjusting unit which adjusts an inner diameter of the ring formed by the strip-like unit by means of a driving force provided from the outside.

9. The device for partially repairing a pipe according to claim 3, wherein the hose band comprises:
a circular arc-like band unit provided with a pair of closed curves opposite to each other;
an auxiliary band unit coupled to an inner circumferential surface of the band unit and forming a cylindrical structure together with the band unit;
a pair of coupling nuts respectively inserted in the closed curves and having threaded holes formed therein opposite to each other; and
a coupling bolt coupled with the closed curves and the coupling nuts and adjusting a distance between the pair of coupling nuts depending on a direction of rotation of the bolt.
